# EUROPÄISCHE PATENTANMELDUNG

(11) **EP 2 578 473 A1**
(43) Veröffentlichungstag der Anmeldung: **10.04.2013**
(21) Anmeldenummer: 11184197.9
(22) Anmeldetag: 06.10.2011
(51) Int. Cl.: B62D 21/11, B62D 29/04, B29C 69/02

(54) **Achsträger für Kraftfahrzeuge**

(71) Anmelder: SMP Deutschland GmbH, 79268 Bötzingen (DE)
(72) Erfinder: Rinderlin, Jürgen, 79279 Vörstetten (DE)
(74) Vertreter: Patentanwälte Westphal, Mussgnug & Partner

(57) **Zusammenfassung**

Die vorliegende Erfindung betrifft einen Achsträger aus mindestens einer ein U-förmiges Profil aufweisenden, durch Verstärkungsrippen (6) stabilisierten Halbschale (2,3) aus faserverstärktem Kunststoff.

## Beschreibung

Die vorliegende Erfindung betrifft einen Achsträger für Kraftfahrzeuge mit den Merkmalen des Oberbegriffs des Anspruchs 1.

Bei der Konstruktion von Kraftfahrzeugkarosserien ist man bestrebt, unter Erfüllung der jeweiligen technischen Anforderungen Bauteile mit möglichst geringem Gewicht zu entwerfen. Dies hat bei der Entwicklung von Achsträgern dazu geführt, diese in einer Schalenbauweise zu fertigen, wobei Blechschalen zu einem Hohlprofil miteinander verbunden und durch gezielte Auswahl der Blechdicke und der Form des Hohlprofils entsprechend der zu erwartenden Belastung dimensionierte Bauteile erzeugt werden, die ein optimiertes Gesamtgewicht aufweisen.

So wird in der DE 10 2007 030 929 B4 ein Achsträger für Kraftfahrzeuge beschrieben, der zwei Quer- und zwei Längsträger umfasst, der zumindest teilweise in der Schalenbauweise ausgeführt ist.

Gattungsgemäße Achsträger werden üblicherweise auf Grund der hohen Anforderungen hinsichtlich Steifigkeit und Crashbeständigkeit aus Stahl oder Aluminium hergestellt. Dabei haben diese Bauteile, selbst bei einer Schalenbauweise, immer noch ein enorm hohes Gewicht und sind auf Grund ihrer aufwendigen Fertigung sehr teuer. Erschwerend kommt hinzu, dass die Achsträger komplizierte Bauteile mit vielen Anbindungspunkten am Fahrwerk und Schnittstellen zur Fahrzeugstruktur sind. Dies führt dazu, dass ein solches Bauteil in den meisten Fällen aus vielen Einzelteilen besteht, die miteinander kombiniert und zusammengefügt werden müssen, was zur Folge hat, dass zur Herstellung dieser Bauteile häufig große und teuere Fertigungsanlagen notwendig sind.

Um die Fertigungskosten zu minimieren, verfolgt man häufig eine sogenannte Plattformstrategie, bei der ein Achsträger für viele Modellvarianten eingesetzt wird, was wiederum zur Folge hat, dass der Achsträger für das größte Fahrzeug ausgelegt werden muss und zwangsläufig bei den kleineren Modellen überdimensioniert ist. Ein weiteres Problem bei der Verwendung von Metallblechen besteht darin, dass eine Variation der Wandstärken nur in einem beschränkten Maße möglich ist, die Bauteile aber oft lediglich an einzelnen besonders belasteten Stellen eine entsprechend hohe Wandstärke aufweisen müssen, was dann dazu führt, dass die Wandstärken des gesamten Bauteils häufig über der tatsächlich notwendigen Wandstärke liegt, und somit das Gewicht des Bauteils künstlich hochgehalten wird.

Ein weiteres Problem bei den konventionellen Achsträgern besteht darin, dass die Bauteile im Nassbereich angeordnet sind und entsprechend vor Korrosion geschützt werden müssen. Da die Achsträger häufig aus mehreren Bauteilen bestehen, die durch Schweißen zusammengefügt werden, können auch Spannungen oder ein Verzug des Bauteils auftreten, was später durch Richten und Spannungsfreiglühen wieder korrigiert werden muss.

Hinzu kommt, dass in der Umgebung des Achsträgers viele Bauteile angeordnet sind, die mittelbar oder unmittelbar mit dem Achsträger verbunden sind, wobei die Ausgestaltung dieser Bauteile häufig nicht optimal ist, da sie im Wesentlichen von der Form des Achsträgers geprägt ist.

Der vorliegenden Erfindung liegt somit die Aufgabe zu Grunde, einen Achsträger zu entwickeln, der die oben geschilderten Nachteile nicht aufweist.

Gelöst wird die Aufgabe durch einen Achsträger aus Kunststoff, wobei man die für einen Achsträger erforderliche Stabilität und Steifigkeit durch eine besondere Bauweise hält, wobei der Querträger und Längsträger umfassende Achsträger mindestens eine ein U-förmiges Profil aufweisende, durch Verstärkungsrippen stabilisierte Halbschale aus faserverstärktem Kunststoff umfasst. Eine bevorzugte Ausgestaltung der vorliegenden Erfindung sieht vor, dass der Achsträger im Wesentlichen aus zwei derartigen Halbschalen aus Kunststoff aufgebaut ist, nämlich einer Oberschale und einer Unterschale, die in z-Richtung miteinander verklebt oder verschweißt werden. Als Basis ist ein faserverstärkter technischer Kunststoff vorgesehen, wobei die Fasern ausgewählt sind aus der Gruppe bestehend aus Glasfasern, Aramidfasern, Polypropylenfasern, Metallfasern und Kohlefasern.

Der besondere Vorteil bei der Fertigung des Achsträgers aus Kunststoff besteht darin, dass auf einfache Weise die extrem belasteten Stellen gezielt beispielsweise durch Erhöhung der Wandstärke, durch den Einbau von Verstärkungsrippen oder Einleger verstärkt werden können und damit ein Versagen im Betrieb oder beim Crash vermieden und die Kräfte optimal in den Achsträger eingeleitet werden können.

Als Fertigungsverfahren für den Achsträger bieten sich das Spitzgießen oder das Fließpressen an, wobei auch Kombinationen dieser beiden Herstellverfahren eingesetzt werden können, sodass beispielsweise die Hauptlastpfade über Fließpressen hergestellt werden, während andere Bereiche über Spritzgießen angeformt werden.

Die Konstruktionsfreiheit des Kunststoffes erlaubt es, den Achsträger individuell für jeden Punkt und jeden Bereich speziell und gezielt auszulegen, wobei alle denkbaren Geometrien und Querschnitte möglich sind und auch Hinterschnitte durch eine entsprechende Werkzeugtechnologie, wie z.B. Schieberlösungen, realisiert werden können.

Als Materialien für den Achsträger können alle möglichen Kunststoffe eingesetzt werden, wobei der Schwerpunkt allerdings bei den technischen und faserverstärkten Kunststoffen liegt, wobei die Fasern vorteilhaft aus Glas, Aramid, Polypropylen, Metall oder Kohle sein können.

Festigkeitsuntersuchungen haben ergeben, dass die Wandstärke des Achsträgers vorteilhaft zwischen 4 und 16 mm betragen sollte, wobei jedoch auch je nach lokalen Anforderungen größere oder geringer Wandstärken möglich sind.

Für den Fall, dass der Achsträger aus einer Oberschale und einer Unterschale ausgebildet ist, sollte das aus den beiden Halbschalen gebildete Hohlprofil vorteilhaft einen im Wesentlichen rechteckigen Querschnitt aufweisen, wodurch das Bauteil eine besonders hohe Stabilität erhält.

Eine weitere vorteilhafte Ausgestaltung der vorliegenden Erfindung sieht vor, dass die Halbschalen eingepresste oder eingegossene Metallbuchsen oder Metallbleche als Verstärkungen aufweisen, womit der Achsträger als Hybridvariante ausgeführt ist, wobei gerade in den Bereichen der Anbindungspunkte für Dreieckslenker, Stabilisatoren und Spurstangen derartige Verstärkungen vorteilhaft sind. Auch können zusätzlich Verstärkungsbleche zur optimalen Einleitung der Energie beim Crash in die Achsträger integriert werden, damit die Energie in diesem Fall gleichmäßig in die Längsachsen des Achsträgers eingeleitet wird.

Eine besondere Ausgestaltung des Achsträgers ist im Bereich der Lager erforderlich, deren Funktion darin besteht, den Achsträger von der Fahrzeugstruktur zu entkoppeln, sodass keine Schwingungen übertragen werden können, die das Fahrverhalten negativ beeinflussen würden. Bei der konventionellen Bauweise aus Metall werden die Lager mit hohem Druck in dafür vorgesehene Aufnahmen eingepresst, wodurch ein fester Sitz der Lager im Achsträger gewährleistet ist.

In Kunststoff können derartige Lager nicht eingepresst werden, da der Kunststoff sich unter einem entsprechenden Druck thermoplastisch verändert und dem Druck nachgeben würde, sodass kein fester Sitz des Lagers gewährleistet werden könnte. Dieses Problem kann auf unterschiedliche Art gelöst werden.

Eine erste Lösung sieht vor, dass das Lager bzw. ein für das Lager vorgesehener Gummi direkt in eine dafür vorgesehene Lageröffnung des Achsträgers vulkanisiert wird, wobei dann die Wandung des Achsträgers das Lagergehäuse bildet.

Eine weitere vorteilhafte Ausgestaltung im Bereich der Achslager sieht vor, die Lageröffnung im Achsträger direkt mit Kunststoff zu füllen und den Durchgang zur Befestigung an der Fahrzeugstruktur durch eine Hülse zu gewährleisten. Diese einfache Lösung ist möglich, da Kunststoff selber gute Dämpfungseigenschaften besitzt. Ist ein arteigener Kunststoff vorgesehen, können die Lager in einem Arbeitsgang direkt bei der Fertigung ausgebildet werden.

Eine weitere Ausgestaltung sieht vor, das Lager ins Werkzeug einzulegen und zu umspritzen bzw. zu umpressen, was dann zweckmäßig ist, wenn artfremde Kusntstoffe für das Lager eingesetzt werden. Um in diesem Fall einen festen Sitz des Lagers zu gewährleisten ist es günstig, wenn die Oberfläche des Lagers strukturiert ist und auf diese Weise in der Kunststoffmatrix verankert wird.

Gemäß einer weiteren Ausgestaltung erfolgt die Fertigung des Achsträgers in einem vorgelagerten Schritt und die Lager werden anschließend in die dafür vorgesehene Lageröffnungen eingebracht.

Im Folgenden wird die Erfindung anhand von Zeichnungen ausführlich erläutert. Dabei zeigen:
- Fig. 1: eine perspektivische Darstellung eines Achsträgers
- Fig. 2: eine perspektivische Darstellung von zwei Halbschalen für einen Achsträger,
- Fig. 3: eine perspektivische Darstellung eines Achsträgers,
- Fig. 4: den Querschnitt eines Achsträgers,
- Fig. 5: eine perspektivische Darstellung eines Achsträgers mit Differentiallagern und Achslagern und
- Fig. 6: eine Schnittdarstellung von Achslagern.

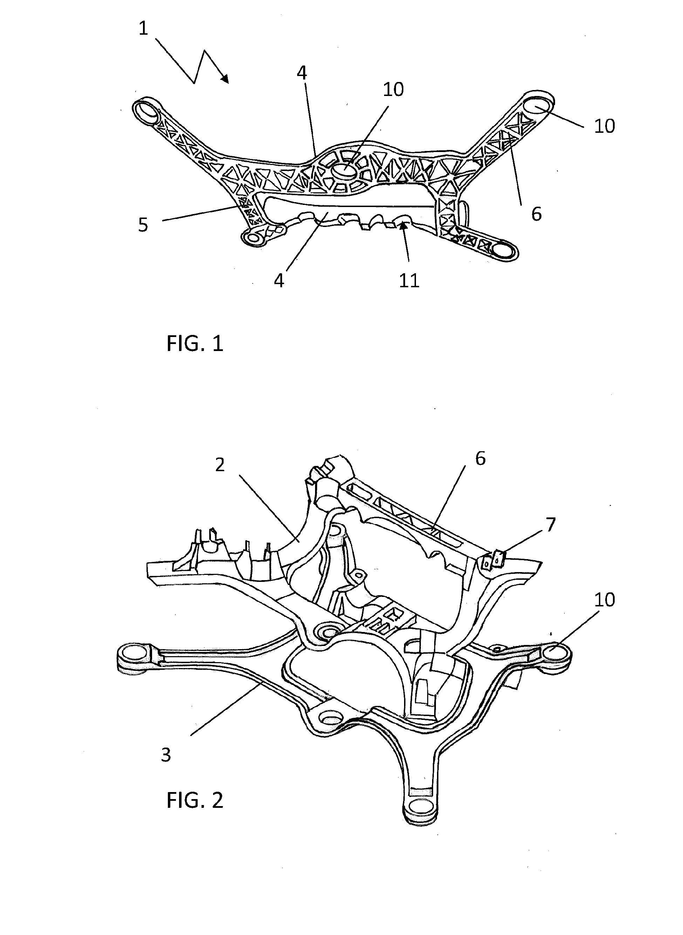

Die Figur 1 zeigt perspektivisch von der Unterseite einen Längsträger 5 und Querträger 4 umfassenden Achsträger 1, wobei der Achsträger 1 als eine ein U-förmiges Profil aufweisende, durch Verstärkungsrippen 6 stabilisierte Halbschale aus faserverstärktem Kunststoff ausgebildet ist. Die als Aufnahmen für die Lager vorgesehenen Lageröffnungen 10 sind bei dieser Darstellung noch frei und im Bereich des hinteren Querträgers 4 sind zusätzlich halbkreisförmige Ausbuchtungen 11 zu erkennen, die durch eine Kombination mit einem korrespondierenden Gegenstück zum hinteren Querträger 4 ebenfalls zu Lageröffnungen 10 ausgebildet werden können. Die in der Figur 1 dargestellte Ausgestaltung entspricht einer besonderen Ausführungsform der vorliegenden Erfindung, wobei der gesamte Achsträger 1 als eine einzige U-förmige Halbschale ausgebildet ist, die durch eine Vielzahl von Verstärkungsrippen 6 im Innern der Halbschale stabilisiert ist.

Die Figur 2 zeigt in einer perspektivischen Darstellung eine Oberschale 2 und eine Unterschale 3, aus denen durch Verkleben oder Verschweißen in z-Richtung ein erfindungsgemäße Achsträger 1 gebildet wird. Bei der Oberschale 2 sind Metallbuchsen 7 zu erkennen, die als Halterungen für Befestigungen von Anbauteilen dienen. Ober- und Unterschale 2, 3 können durch Fließpressen oder Spritzgießen von Kunststoffen erhalten werden, wobei vorteilhaft faserverstärkte technische Kunststoffe eingesetzt werden. Die Wandstärke der Schalen fällt unterschiedlich aus und beträgt in Abhängigkeit von der Belastung des jeweiligen Bereiches zwischen 4 und 16 mm. Die für den Achsträger geforderte Steifigkeit und Stabilität wird durch zusätzliche Verstärkungsrippen 6 erreicht, die bei dieser Darstellung lediglich im äußeren Bereich der Oberschale 2 zu sehen sind, wobei angemerkt werden muss, dass die für den Achsträger 1 erforderliche Stabilität nur erreicht wird, wenn auch im Innern der Oberschale 2 ähnliche Verstärkungsrippen wie in Figur 1 angeordnet sind, die bei der gewählten Perspektive jedoch nicht zu sehen sind. Die Unterschale 3, an der die Lageröffnungen 10 angeordnet sind, weist im vorliegenden Fall keine Verstärkungsrippen auf. Bei Bedarf sind auch in diesem Bereich Verstärkungsrippen vorzusehen.

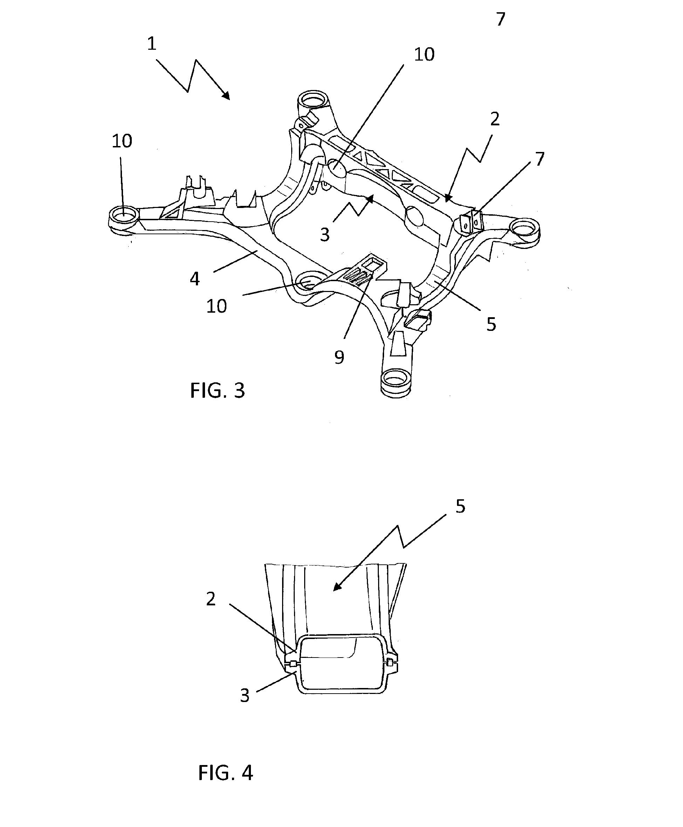

Die Figur 3 zeigt einen aus Oberschale 2 und Unterschale 3 durch Verschweißen oder Verkleben zusammengefügten Achsträger 1. Im Wesentlichen besteht der Achsträger 1 aus zwei Querträgern 4 und zwei Längsträgern 5. Des Weiteren sind bei dieser Darstellung wiederum die Metalleinleger 7 zu erkennen und in der zusammengesetzten Form des Achsträgers nun auch zusätzliche Lageröffnungen 10 für diverse Lager, wie z. B. Differentiallager oder Achslager. Daneben ist noch eine Aufhängung 9 für die Abgasanlage zu erkennen. Auf weitere Details des Achsträgers 1 soll in diesem Zusammenhang nur allgemein hingewiesen werden, wobei anzumerken ist, dass die hohen Freiheitsgrade bei der Konstruktion mit Kunststoff es erlauben, dass die Form des Achsträgers 1 den individuellen Gegebenheiten des Bauraums angepasst ist, was bei einer konventionellen Bauweise in dieser ausgeprägten Form nicht möglich ist.

Die Figur 4 zeigt einen Längsträger 5 im Querschnitt, womit das im Wesentlichen rechteckige Hohlprofil verdeutlicht wird, welches aus den beiden U-förmigen Halbschalen 2, 3 ausgebildet wird und eine besondere Steifigkeit und Torsionsbeständigkeit des Achsträgers ermöglicht.

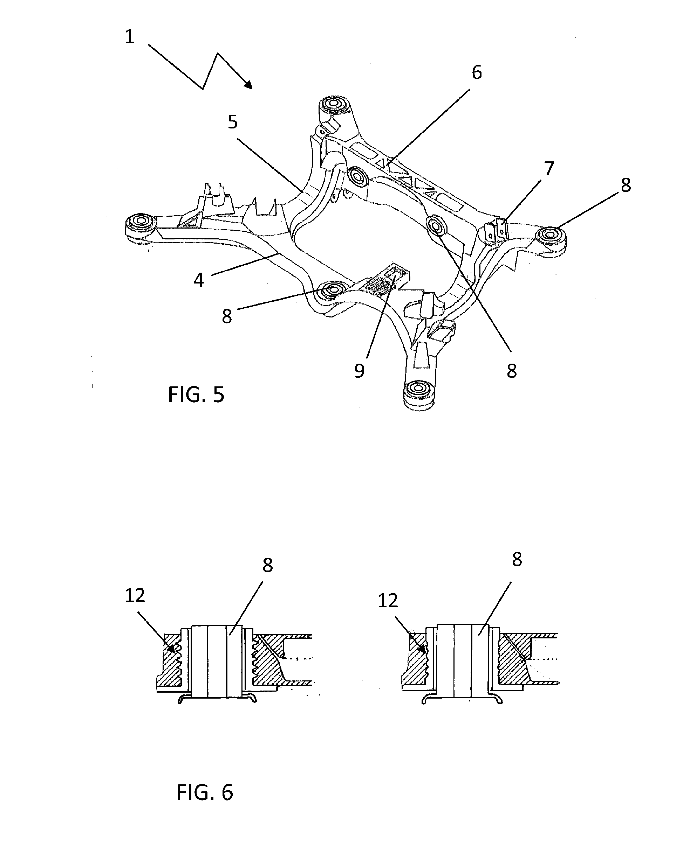

In der Figur 5 ist der Achsträger 1 aus der Figur 2 zu sehen, wobei nun die Lageröffnungen 10 mit den entsprechenden Lagern 8 belegt sind. Die Lager 8 können auf unterschiedliche Weise im Kunststoffträger verankert sein, was bei der vorliegenden Darstellung im Detail jedoch nicht zu erkennen ist. So können die Lager 8 beispielsweise als direkt in den Achsträger 1 vulkanisierte Lager aus Gummi ausgestaltet sein oder auch als Kunststofflager, die entweder direkt ausgeformt werden oder als fertige Lager in die Form eingelegt und während der Fertigung umspritzt oder umpresst werden.

Derartig umspritzte oder umpresste Lager 8 sind in der Abbildung 6 zu sehen, wobei der Formschluss zwischen Lager 8 und Achsträger 1 durch strukturierte Oberflächen 12 der Lager 8 begünstigt wird.

### Bezugszeichenliste

- 1: Achsträger
- 2: Oberschale
- 3: Unterschale
- 4: Querträger
- 5: Längsträger
- 6: Verstärkungsrippe
- 7: Metallbuchse
- 8: Lager
- 9: Aufhängung Abgasanlage
- 10: Lageröffnung
- 11: Ausbuchtung
- 12: Lageroberfläche

## Patentansprüche

1. Achsträger (1) für Kraftfahrzeuge, wobei der Achsträger (1) Querträger (4) und Längsträger (5) umfasst, **dadurch gekennzeichnet, dass** der Achsträger (1) mindestens eine ein U-förmiges Profil aufweisende, durch Verstärkungsrippen stabilisierte Halbschale aus faserverstärktem Kunststoff umfasst.

2. Achsträger (1) nach Anspruch 1,
**dadurch gekennzeichnet, dass** die Fasern ausgewählt sind aus der Gruppe bestehend aus Glasfasern, Aramidfasern, Polypropylenfasern, Metallfasern und Kohlefasern.

3. Achsträger (1) nach Anspruch 1 oder 2,
**dadurch gekennzeichnet, dass** der Achsträger im Wesentlichen aus zwei Halbschalen aus Kunststoff ausgebildet ist, wobei die Halbschalen eine Oberschale (2) und eine Unterschale (3) umfassen, wobei die Oberschale (2) und die Unterschale (3) in z-Richtung miteinander verklebt oder verschweißt sind.

4. Achsträger (1) nach Anspruch 3,
**dadurch gekennzeichnet, dass** die Querträger (4) und Längsträger (5) einen Querschnitt mit einem im Wesentlichen rechteckigen Hohlprofil aufweisen.

5. Achsträger (1) nach einem der Ansprüche 1 bis 4,
**dadurch gekennzeichnet, dass** die mindestens eine Halbschale durch Fließpressen oder Spritzgießen oder einer Kombination dieser beiden Verfahren gefertigt ist.

6. Achsträger (1) nach einem der Ansprüche 1 bis 5,
**dadurch gekennzeichnet, dass** die mindestens eine Halbschale aus unterschiedlichen Kunststoffmaterialien gefertigt ist, wobei in Abhängigkeit der lokalen Belastung Variationen in der Wandstärke, lokale Verstärkungen durch Rippen (6) oder Einleger und der Einsatz von unterschiedlichen Fasern vorgesehen sind.

7. Achsträger (1) nach einem der Ansprüche 1 bis 6,
**dadurch gekennzeichnet, dass** die mindestens eine Halbschale eingepresste oder eingegossene Metallbuchsen (7) oder Metallbleche als Verstärkungen aufweist.

8. Achsträger (1) nach einem der Ansprüche 1 bis 7,
**dadurch gekennzeichnet, dass** der Achsträger (1) während des Spritzgießens oder Fließpressens ausgebildete Lager (8) aus arteigenen Kunststoffen und/oder umspritzte oder umpresste Lager (8) aus artfremden Kunststoffen umfasst.

9. Achsträger (1) nach einem der Ansprüche 1 bis 7,
**dadurch gekennzeichnet, dass** der Achsträger (1) Lageröffnungen (10) aufweist.

10. Achsträger (1) nach Anspruch 9,
**dadurch gekennzeichnet, dass** der Achsträger (1) direkt in die Lageröffnungen (10) einvulkanisierte Lager (8) aus Gummi und/oder in die Lageröffnungen (10) eingebrachte Lager (8) aus Kunststoff aufweist.

11. Verfahren zur Herstellung eines Querträger (4) und Längsträger (5) umfassenden Achsträgers (1) für Kraftfahrzeuge, wobei mindestens eine ein U-förmiges Profil aufweisende, durch Verstärkungsrippen (6) stabilisierte Halbschale aus faserverstärktem Kunststoff durch Spritzgießen, Fließpressen oder einer Kombination der beiden vorgenannten Verfahren gefertigt wird.

12. Verfahren nach Anspruch 13,
**dadurch gekennzeichnet, dass** im Achsträger (1) Lageröffnungen (10) vorgesehen sind, wobei in die Lageröffnungen (10) in einem zweiten Verfahrensschritt Lager (8) aus Kunststoff und/oder Gummi eingebracht oder einvulkanisiert werden.

13. Verfahren nach Anspruch 12,
**dadurch gekennzeichnet, dass** während des Spritzgießens oder Fließpressens Lager (8) aus arteigenem Kunststoff direkt ausgebildet und/oder Lager (8) aus artfremdem Kunststoff umspritzt oder umpresst werden.
